# EUROPÄISCHE PATENTANMELDUNG

(11) **EP 1 181 973 A1**
(43) Veröffentlichungstag der Anmeldung: **27.02.2002**
(21) Anmeldenummer: 01120001.1
(22) Anmeldetag: 18.08.2001
(51) Int. Cl.: B01F 3/04, C02F 3/20, F16L 37/00

(54) **Vorrichtung zum Befestigen von Wasserbelüftungseinrichtungen an Luftzuführungsleitungen**

(30) Priorität: 21.08.2000 DE 10041147
(71) Anmelder: Jäger, Andreas, Dr., 30625 Hannover (DE)
(72) Erfinder: Jäger, Andreas, Dr., 30625 Hannover (DE)
(74) Vertreter: Depmeyer, Jochen

(57) **Zusammenfassung**

Die Erfindung geht aus von einer Vorrichtung zum Befestigen von Wasserbelüftungseinrichtungen an Luftzuführungsleitungen, wobei diese Einrichtungen mit einer Halterung (7) lösbar verbunden sind, die an der Luftzuführungsleitung befestigt ist. Um die meist langgestreckte Wasserbelüftungseinrichtung einfach und schnell an der Halterung befestigen zu können, ist diese mit einer hinterschnittenen Nut (12) versehen, in die ein Vorsprung (13) der Belüftungseinrichtung nach Art einer Schwalbenschwanzverbindung eingreift, um so die Verbindung durch eine horizontale Schiebebewegung der Belüftungseinrichtung herbeiführen zu können.

## Beschreibung

Die Erfindung betrifft eine Vorrichtung zum Befestigen von Einrichtungen zum feinblasigen Belüften von Wasser an Luftzuführungsleitungen, wobei die Einrichtungen durch eine Halterung an der Luftzuführungsleitung befestigt sind, über diese Halterung mit Luft gespeist werden und lösbar mit der Halterung verbunden sind.

Bei den bekannten Vorrichtungen dieser Art ist die Belüftungseinrichtung mit einem Rohrstutzen versehen, der durch ein Schraubgewinde mit der Halterung verbunden ist. Insb. bei langgestreckten Belüftungseinrichtungen ist diese Befstigungsart nicht nur zeitraubend, sondern auch deshalb nachteilig, weil wegen benachbarter Einrichtungen eine zum Befestigen erforderliche Schraubbewegung praktisch nicht durchführbar ist.

Aufgrund der Erfindung soll eine Vorrichtung der eingangs erwähnten Art vorgeschlagen werden, die bei allen nur möglichen Belüftungseinrichtungen eine schnelle und sichere Befestigung der Belüftungseinrichtung an der Halterung zulässt.

Zur Lösung dieser Aufgabe ist erfindungsgemäss die Halterung zumindest mit einer gerade verlaufenden, nutenartigen, seitlich hinterschnittenen Vertiefung versehen, in die ein mit dem Querschnitt der Vertiefung korrespondierender Vorsprung an der Belüftungseinrichtung einschiebbar ist, um so eine Verbindung zwischen der Halterung und der Belüftungseinrichtng durch eine horizontale Schiebebewegung herbeiführen zu können. Dabei ist es auch möglich, die Vertiefung an der Luftzuführungsenrichtung und den damit korrespondierende Vorsprung an der Halterung anzuordnen. Besonders vorteilhaft ist es dabei, wenn diese Verbindung als Schwalbenschwanzverbindung ausgeführt ist.

Um ausserdem im Bereich der Verbindungsstelle eine ausreichende Abdichtung des Luftkanals gegenüber dem Wasser herbeizuführen, ist eine Dichtung vorgesehen, die in den Schiebeweg hineinragt und mit dem Aufschieben abdichtend verformbar ist. Durch die sich verformende Dichtung wird zudem nicht nur ein Dichtungseffekt erreicht, vielmehr wird zugleich eine Fixierung der Verbindung erreicht, die jedoch in Sonderfällen durch weitere Fxierungsmittel z.B. kleine Schrauben verstärkt werden kann.

Die Befestigung der Halterung an der Luftzuführungsleitung ( Sammelleitung ) kann durch Verklammern oder Verhaken ebenfalls lösbar ausgeführt werden. Es ist aber auch möglich, die Halterung mit dünnwandigen Armen auszustatten, die durch Verschrauben oder Verkleben mit der Wandung der Luftzuführungsleitung verbunden werden können.

Die Belüftungseinrichtungen können langgestreckt, rohrförmig ausgeführt sein, jedoch sind auch platten-oder tellerförmige Belüftungseinrichtungen und ferner Rohrenden verwendbar, die unmittelbar zu einer Belüftungseinrichtung führen bzw. Bestandteil hiervon sind. Dabei können die Belüftungseinrichtungen oberhalb und/oder unterhalb der Luftzuführungsleitung montiert werden. In allen Fällen ergeben sich aufgrund der Erfindung die vorgenannten Vorteile.

Weitere Einzelheiten der Erfindung werden anhand der Zeichnung erläutert, in der Ausführungsbeispiele der Erfindung dargestellt sind. Es zeigen :
Fig. 1 eine Vorrichtung zum Befestigen einer langgestreckten, rohrförmigen Belüftungseinrichtung an einem Sammelrohr im Schnitt,
Fig. 2 eine Teildraufsicht auf einen aktiven, kleine Luftblasen abgebenden Teil der Belüftungseinrichtung,
Fig. 3 den für die Verbindungsstelle vorgesehenen Teil der Belüftungseinrichtung in schaubildlicher Darstellung,
Fig. 4 die Verbindungsstelle zwischen dem Sammelrohr und der Belüftungseinrichtung in schaubldlicher Darstellung und
Fig. 5 eine gegenüber Fig. 1 abgewandelte Vorrichtung unter Veränderung der Verbindung zwischen dem Luftzuführungsrohr und der Halterung zur Befestigung der Belüftungseinrichtung.

Die Belüftungseinrichtung besteht im wesentlichen aus einem innen mit Distanzrippen 1' versehenen Halterohr 1, einem dieses beidseitig überragenden Tragrohr 2 und einem dünnwandigen, beidseitig vom Halterohr 1 angeordneten, das Tragrohr 2 eng umschliessenden Schlauch 3 aus Gummi od. dgl., der am Ende des Halterohres und am Ende des Tragrohres 2 durch dort befindliche Schellen 4 gehalten ist und mit einer Vielzahl kleiner Schlitze 5 versehen ist, durch die feine Luftbläschen in das Wasser entweichen können. Die Schlitze öffnen sich unter dem Luftinnendruck und schliessen sich, wenn der Innnendruck unter ein bestimmtes Maß abgefallen ist.

Die Luftzufuhr erfolgt über ein hart eingestelltes Kunststoffrohr 6 (Sammelrohr), das die Luftzuführungsleitung für meist mehrere Belüftungseinrichtungen bildet. An dem Kunststoffrohr 6 ist eine Halterung 7 befestigt, mit der das Halterohr 1 lösbar verbunden ist.

Das Halterohr 1 ist mit einer radialen Bohrung 8 versehen, über die aus dem Kunststoffrohr 6 die leicht vorgespannte Luft über eine in das Kunststoffrohr 6 hineinragende Muffe 9 im Sinne der Pfeile 10 zwischen Halterohr 1 und Tragrohr 2 und schliesslich zwischen Halterohr 1 und die beiden Schläuche 3 gelangt, von dem aus - wie erwähnt - die Luft in das Wasser gelangt.

Die aus Kunststoff bestehende Halterung 7 liegt mit zwei dünnwandigen Armen 11 aussen am Kunststoffrohr 6 an, die festhaftend z.B. durch Ankleben mit dem Kunststoffrohr 6 verbunden sind. Ggfs. kann diese Verbindung aber auch durch beide Wandungen durchsetzende Schrauben hergestellt oder verstärkt werden. Die Halterung 7 ist zudem an der Unterseite mit einer gestreckt bzw. gerade verlaufenden, seitlich hinterschnittenen Nut 12 (Trapeznut) versehen, die zur Aufnahme eines entsprechend geformten bzw. trapezförmigen Vorsprunges 13 des Halterohres 1 dient. Dabei verlaufen die Elemente 12, 13 zweckmässigerweise quer zum Halterohr 1 bzw. in Richtung des im rechten Winkel zum Halterohr 1 gerichteten Kunststoffrohres 6 und liegen insgesamt im wesentlichen in einer waagerechten Ebene.

Aus Gründen der Abdichtung und der Fixierung der Schwalbenschwanzverbindung wird die starre Muffe 9 von einer unten verdickten Dichtung 14 aus Gummi od. dgl. umschlossen. Diese Dichtung ist dabei so bemessen, dass ihre unten liegende wulstartige Verdickung vor der Herstellung der Schwalbenschwanzverbindung in den Weg des Vorsprunges 13 hineinragt. Zugleich liegt die Dichtung 14 auch dichtend an dem Rand der am Kunststoffrohr 6 befindlichen Durchbrechung zur Aufnahme der Dichtung 14 und der Muffe 9 an. Damit ist sichergestellt, dass die vom Kunststoffrohr 6 zugeführte Luft nur unter den Schlauch 3 gelangen kann. Wird numehr die Verbindung hergestellt bzw. der Vorsprung 13 eingeschoben, so wird die Dichtung 14 elastisch verformt, wodurch sich ein Dichtungs- und ein Halteeffekt ergibt.

Diese Ausführung der Vorrichtung hat den grossen Vorteil, dass das Kunststoffrohr 6 an gewünschten Stellen mit einer Halterung 7 versehen werden kann. Die schon zusammengestellten Teile der Belüftungseinrichtung (Teile 1, 13, 2, 3 und 4) können dann in einfacher Weise mit den Halterungen 7 durch Einschieben verbunden werden.

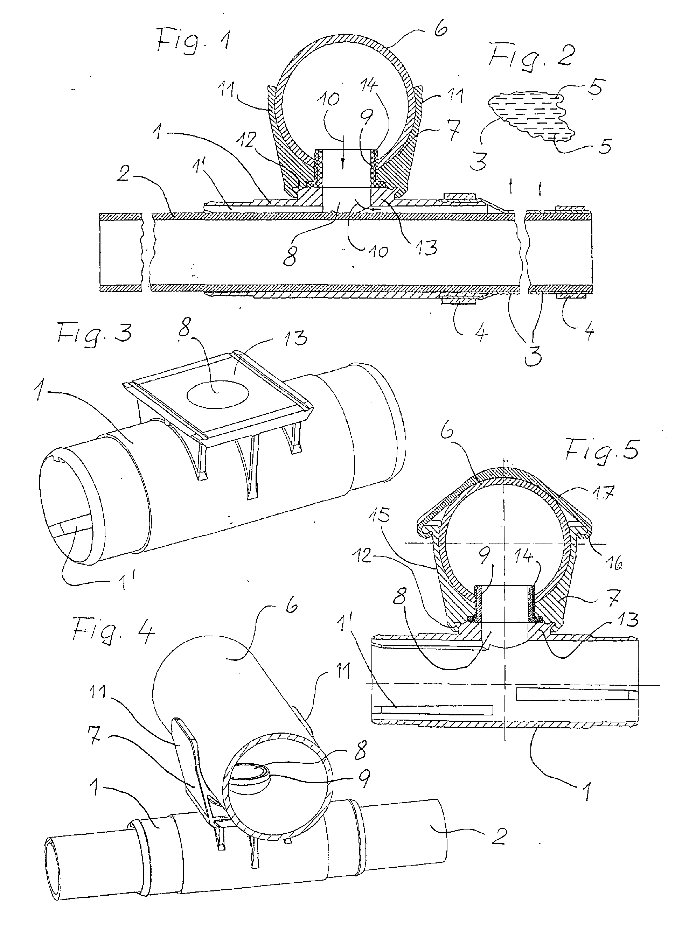

Gemäß Fig. 5 können anstelle der angeklebten bzw. angeschraubten Arme 11 am oberen Ende hakenförmig ausgeführte Arme 15 benutzt werden. In die Haken dieser Arme greifen mit Spannung die Endhaken 16 von Bügeln 17 ein, die das Kunststoffrohr 6 übergreifen, um so auch eine Lösbarkeit der Halterung 6 zu erzielen.

Alle Teile der Vorrichung -ausgenommen die Dichtung (14)-sind als Kunststofformkörper ausgeführt, wobei jedoch der Bügel 17 elastisch verbiegbar sein muss.

## Patentansprüche

1. Vorrichtung zum Befestigen von Einrichtungen zum feinblasigen Belüften von Wasser an Luftzuführungsleitungen, wobei die Einrichtungen durch eine Halterung an der Luftzuführungsleitung befestigt sind, über die Halterung mit Luft gespeist werden und lösbar mit der Halterung verbunden sind, **dadurch gekennzeichnet, dass** die Halterung (7) bzw. die Belüftungseinrichtung (1,2,3) mit mindestens einer gerade verlaufenden, nutenartigen, seitlich hinterschnittenen Vetiefung (12) versehen sind, in die ein mit dem Querschnitt der Vertiefung korrespondierender Vorsprung an der Belüftungseinrichtung (1,2,3) bzw. an der Halterung (7) einschiebbar ist.

2. Vorrichtung nach Anspruch 1, **dadurch gekennzeichnet, dass** die formschlüssige Verbindung zwischen der Halterung (7) und der Belüftungseinrichtung zumindest im wsentlichen in einer waagerechten Ebene angeordnet ist.

3. Vorrichtung nach Anspruch 1, **dadurch gekennzeichnet, dass** die Verbindung zwischen der Halterung (7) und der Belüftungseinrichtung nach Art einer Schwalbenchwanzverbindung ausgeführt ist.

4. Vorrichtung nach Anspruch 1, **dadurch gekennzeichnet, dass** die Halterung (7) mit dünnwandigen Armen (11) aussen an der Luftzuführungsleitung (6) anliegt und dort angehaftet und/oder angeschraubt ist.

5. Vorrichtung nach Anspruch 1, **dadurch gekennzeichnet, dass** die Halterung (7) mit am Ende hakenförmig ausgeführten Armen (15) versehen ist, die mit Endhaken (16) von Bügeln (17) verhakt sind, die die Luftzuführungsleitung (6) übergreifen.

6. Vorrichtung nach Anspruch 1, **dadurch gekennzeichnet, dass** bei noch nicht verbundenen Teilen (1,7) in die Vertiefung (12) eine Dichtung (14) aus Gummi od. dgl. hineinragt, die bei der Herstellung einer Verbindung elastisch verformbar ist.

7. Vorrichtung nach Anspruch 1, **dadurch gekennzeichnet, dass** sich die Verbindung zwischen der Halterung (7) und der Belüftungseinrichtung bei langgestreckten Belüftungseinrichtungen oberhalb dieser Einrichtungen befindet.

8. Vorrichtung nach Anspruch 1, **dadurch gekennzeichnet, dass** sich die Verbindung zwischen der Halterung (7) und der Belüftungseinrichtung bei platten- oder tellerförmigen Belüftungseinrichtungen unterhalb dieser Einrichtungen befindet.

9. Vorrichtung nach Anspruch 6, **dadurch gekennzeichnet, dass** die hohlzylindrische, zur Halterung (7) hin verdickte Dichtung (14) eine starre, hohlzylindrische Muffe (9) umschliesst, in die Luftzuführungsleitung (6) hineinragt und dichtend am benachbarten Rand einer Durchbrechung in der Luftzuführungsleitung anliegt.

10. Vorrichtung nach Anspruch 1, **dadurch gekennzeichnet, dass** die Luftzuführungsleitung (6) im Abstand voneinander mit fest angebrachten Halterungen (7) versehen und die Belüftungseinrichtung (1,2,3,4) als geschlossene Baueinheit.vorbereitet zur Verbindung mit einer Halterung ausgebildet ist.
